# EUROPEAN PATENT APPLICATION

(11) **EP 4 292 756 A1**
(43) Date of publication of application: **20.12.2023**
(21) Application number: 23179070.0
(22) Date of filing: 13.06.2023
(51) Int. Cl.: B23Q 1/03

(54) **MACHINE FOR PROCESSING PANELS, SHEETS OR THE LIKE, IN PARTICULAR OF WOOD OR MATERIALS MADE OF WOOD OR COMPRISING WOOD**

(30) Priority: 16.06.2022 IT 202200012776
(71) Applicant: Essetre S.r.l. Unipersonale, 36016 Thiene (VI) (IT)
(72) Inventor: SELLA, Nicola, Thiene (VI) (IT)
(74) Representative: Karaghiosoff, Giorgio Alessandro

(57) **Abstract**

Machine for processing panels, sheets or the like, in particular made of wood or materials made of wood or comprising wood, comprising at least one machining station with at least one machining tool and at least one worktable and positioning/feeding table for a work panel, which worktable passing for at least part of its extension, in the workstation in such a position that a work panel is accessible on at least one side by the machining tool and said worktable being provided with a plurality of gripping members of a work panel which can be controlled alternately in an active gripping condition or in an inactive condition in which said at least one work panel is free from said gripping members.

According to the invention, each gripping member consists of a gripper comprising at least one jaw movable against a stationary jaw and a cart or a translation slide along a longitudinal guide, at least two longitudinal guides being provided and at least one of said guides longitudinal extensions can be translated transversely to its longitudinal extension and can be temporarily locked in a translational position, by means of at least one pair of carts or slides.

## Description

The present invention relates to a machine for processing panels, sheets or the like, in particular made of wood or materials made of wood or comprising wood.

In particular, the invention refers to a machine for processing panels, sheets or the like, in particular made of wood or materials made of wood or comprising wood, comprising:
- at least one machining station with at least one machining tool;
- said machining tool being movable by means of motorised actuators along at least one processing axis, preferably along at least two or more processing axes;
- at least one worktable and positioning/feeding table of a work panel, said worktable passing for at least part of its extension in the machining station in such a position that a work panel is accessible on at least one side by the machining tool;
- said worktable is provided with a plurality of gripping members of at least one work panel, said gripping members being operable alternatively in an active condition of gripping said at least one work panel or in an inactive condition in which said at least one work panel is free from said gripping members.

Systems of the aforementioned type are known and provide for complex combinations of positioning and/or movement systems of the workpiece in order to move the workpiece, hold it in the correct position set with respect to the references of a machining tool and also move it relative to the tool for the execution of workings and/or positioning of the working areas of the tool in different parts of the workpiece.

There is therefore a need to improve the construction of the aforementioned machines as regards the configuration of the gripping members and the handling functions of the same for adaptation to the shapes of the workpieces, to the operations to be performed on them and also to the handling of these workpieces.

In addition there is also the need to be able to provide a plurality of machining stations distributed along a path of the workpieces, allowing the transfer of a workpiece from one to the other of at least two adjacent machining stations.

Alternatively, there is also the need to be able to carry out machining operations simultaneously on two or more different workpieces. In this case, the need to configure the machine in such a way as to be able to provide that two or more machining stations or two or more groups comprising two or more stations provided in succession along a predetermined path of the workpiece, can operate simultaneously each on a different workpiece.

According to a more general embodiment of the present invention, the above objects are obtained with a machine for machining panels, sheets or the like, in particular made of wood or materials made of wood or containing wood, comprising:
- at least one machining station with at least one processing tool;
- said machining tool being movable by means of motorised actuators along at least one processing axis, preferably along at least two or more processing axes;
- at least one worktable and positioning/feeding table of a work panel, said worktable passing for at least part of its extension in the workstation in such a position that a work panel is accessible on at least one side by the machining tool;
- said worktable is provided with a plurality of gripping members of said at least one work panel, said gripping members being operable alternatively in an active condition of gripping said at least one work panel or in an inactive condition in which said at least one work panel is free from said gripping members,
   and wherein according to the invention,
- each of said gripping members comprises a gripper comprising at least one movable jaw which is movable by means of actuators, alternatively in a position of retaining by clamping said work panel, towards an opposed jaw and in a position of releasing said panel from said retaining condition, in a spaced position from said opposed jaw by a greater extent than the corresponding size of said work panel;
- each of said gripping members being provided with a cart or a translation slide;
- a pair of longitudinal slide guides extending over at least part of the corresponding dimensions of said worktable and on each of said guides the respective cart or slide of at least one of the said plurality of gripping members is sliding engaged in said longitudinal direction of said longitudinal slide guide;
- at least one of said longitudinal guides being transversally translatable supported at its longitudinal extension and temporarily lockable in a traversing position, by at least one pair of carts or slides, which carts or slides are provided at mutually spaced intervals along said longitudinal extension of said guide and are sliding engaged with a corresponding transverse traversing guide;
- motorised translation actuators of at least some of said gripping members and/or of said at least one longitudinal guide;
- position sensors of said tool and/or of one or more of said gripping members and/or of said at least one longitudinal guide;
- a control unit performing control software in which instructions are enconded to control the respective motorised actuators for moving the machining tool and/or of one or more of said gripping members and/or of at least one of said longitudinal guides and/or the active gripping and inactive release conditions of said gripping members, corresponding to the type of machining to be performed on the work panel.

According to a further feature, both longitudinal guides are movable in a direction perpendicular to their longitudinal extension and temporarily lockable in a predetermined traversing position. In this case, the position in said direction perpendicular to its longitudinal extension of one of said two longitudinal guides can be set in the control unit as a reference position for calculating the movement path of the machining tool and/or the position of the gripping members and/or the position of said second longitudinal guide with reference to the machining to be performed on said panel.

The transversal displacement of said two longitudinal guides relative to each other and in such a way as to vary their mutual distance allows to advantageously adapt the position of the gripping members provided on said longitudinal guides with reference to the dimension in the direction perpendicular to said longitudinal guides of a work panel. Furthermore, by setting in the instructions that can be executed by the control unit, one of said two guides as a unitary and univocal fixed reference for determining the position of the work panel relative to the machining station, said control unit is able to register the perimeter shape of the panel with the machining path of the tool referring to the operations to be performed along the extension of the panel in relation to their relative position with respect to the extension of the panel along the worktable, i.e. the table substantially parallel to the table defined by said two longitudinal guides.

The machining stations can be of any type and also different from each other such as bridge stations and/or of the type known as cantilever. The machining tool is advantageously carried by a head which is supported in such a way as to be able to translate the machining tool relative to the workpiece according to one, two or three translation axes which are not parallel to each other and/or to rotate the machining tool according to one, two or more axes of which at least one can be parallel to a translation axis.

In stations of the cantilever type, said machining stations comprise a cantilevered beam positioned above said two longitudinal guides and oriented transversally thereto, said cantilevered beam carries a translation guide along the longitudinal extension thereof of a machining head which in turn carries at least one machining tool, while said cantilevered beam is supported by a column arranged laterally next to one of the longitudinal guides and which has at its base a slide or cart for sliding along a traversing guide parallel to said longitudinal guide, which traversing guide has a length at least equal to a partial length of said longitudinal guides, the cantilever beam and/or the machining tool can be supported respectively alternatively or in combination in a translatable manner, in the direction of the longitudinal axis of the column.

According to an improvement which is particularly suitable for machining panels or sheets or workpieces having a form factor similar to that of a panel or sheet and in which the thickness of the workpiece, or the size thereof in the perpendicular direction to the plane subtended by the two longitudinal guides is relatively small, in particular compared to the dimension in the transverse direction to said two longitudinal guides or is of such a size that the panel tends to warp downwards due to the action of gravity, i.e. towards said longitudinal guides, the invention provides that in an intermediate position between said two longitudinal guides there is provided a further longitudinal support beam which is parallel to said two longitudinal guides and which bears on its upper side, i.e. facing the work panel, a plurality of enlarged support heads, which heads are distributed in a predetermined order along the longitudinal extension of said longitudinal support beam and can be moved vertically by means of motorised actuators between an extreme position completely withdrawn against said longitudinal support beam and a position projecting towards the work panel and against the facing side of said work panel, optionally in a predetermined higher position with respect to the position of the lateral edges of the panel, said support beam being supported and movable perpendicularly to its longitudinal extension by means of at least one pair of support slides or carts which are positioned at a distance from each other along the longitudinal extension of said support beam and sliding engaged in corresponding transverse translation guides and are actuated by motorised actuators.

Thanks to this feature, the support heads can be brought into an aligned position with the support table of the workpiece to be worked, as defined by the gripping members cooperating with the two perimetral edges of the workpiece parallel to said guides and therefore can support an intermediate zone along a longitudinal line median the workpiece so as to compensate for the downward bulging and to re-establish the perfect planarity of said workpiece. This ensures that downward bulging of the piece can cause inaccuracies in the shape and/or in the position and/or in the dimensions of the areas involved in the machining, such as for example in the openings and/or slots and/or in the holes or slots and/or grooves or other processes carried out using the machining tools.

Despite the considerable relative positioning accuracy obtainable for the two longitudinal guides as regards the distance between them and/or in combination also for the gripping members, it is possible that in the case of workpieces, such as panels or sheets or workpieces having a similar form factor, due to the tolerances, the clamping of said workpiece by means of the gripping members also determines in some conditions an upward bulging due to a compression of the two longitudinal edges cooperating with the gripping members, one towards each other. In this case, advantageously, according to a further characteristic, one or more of said support heads are of the suction or sucker type, being provided with openings on the support side against the panel to be machined, which are in communication with a vacuum and/or suction generator.

As far as the gripping members are concerned, the fact that at least some of these, preferably each of these, can be displaced along the corresponding longitudinal guide so as to assume different positions with respect to the workpiece, allows said gripping members to cooperate with areas of the corresponding peripheral edge of the panel which do not interfere with an area to be machined and/or bring the said gripping members into positions such as to provide for a more resistant or rigid blocking of the panel, for example in areas where the force exerted by the machining tool on the workpiece is larger and/or where the intended machining causes at least a local weakening of the workpiece with regard to its mechanical strength.

In order to facilitate the movement of the workpiece relative to one or more of the gripping members, according to a further feature of the invention which can be provided in combination with any one or more of the previous features or combinations of features, at least one of the jaws of the gripping members, is intended to cooperate with the underside of the panel in correspondence with the perimetric gripping band by said jaw and said jaw has a support surface for said lower side of the panel which is characterized by a low coefficient of friction with reference to the material of said underside of said panel.

Various solutions are possible, in which, for example, said jaw has a sliding support surface which is made of a material having a low friction coefficient, or solutions of the mechanical type.

According to a preferred embodiment, said low friction coefficient surface consists of one or more rollers which can rotate around horizontal axes and perpendicular to the longitudinal extension of said longitudinal guides or belts or tapes closed on themselves and deferred around a pairs of pulleys spaced in the longitudinal direction of said longitudinal guides and rotatable around horizontal axes perpendicular to the longitudinal extension of said longitudinal guides.

Alternatively, said low friction coefficient support surface can consist of a ball housed in a spherical seat and freely rollable in said seat, for example, thanks to cylindrical or spherical bearings or surfaces coated with low friction coefficient material.

According to one embodiment, in order to prevent the tangential resting areas of the rollers and/or balls against the surface of the workpiece from generating impressions on said surface, it is also possible to optionally provide that said rollers and/or balls are supported retractable with respect to a support surface of said jaw against the workpiece, for example that said rollers or said balls protrude through windows made in said support surfaces and that the rolling axes and/or the rolling seat of the same is translatable perpendicularly to said support surface between a retracted position in which the surface of said rollers and/or said balls is below said support surface and does not come into contact with the workpiece, in a position wherein said rollers or said balls are pushed outwards by a predetermined amount from said windows in the support surface of the jaws and protrude towards the workpiece, coming into contact with the same and lifting it by a corresponding amount from the support surface of the corresponding jaw.

The movement can take place thanks to actuators of any type and it is possible to provide that the rollers or balls and/or the corresponding rolling support seats are automatically urged by elastic means in one of the two retracted or protruding positions, while they are brought by actuators which operate against said elastic means to the corresponding extreme position.

A construction of this kind is for example described in document MI94A002230 (101994900399989) and can be used with obvious modifications for a configuration of the support surfaces of said jaws as described above.

According to a preferred embodiment, the worktable of the workpiece is preferably horizontal and/or substantially horizontal, said two longitudinal guides being positioned relative to each other so as to define a horizontal plane. In this case, the gripping members have an upper jaw and a lower jaw having substantially horizontally oriented contact and support surfaces for the workpiece.

When the workpiece is a flat panel, that panel is also placed on the worktable in a horizontal orientation.

According to yet another feature which may or may not be provided for the purpose of defining a preventive and temporary positioning of the piece with respect to a gripping member, without requiring the activation of the gripping action of the same, at least one or at least some of the gripping members or all the gripping members have a jaw designed to cooperate with the underside of the panel and said jaw has a support surface for said underside of the suction or sucker panel or designed to apply a vacuum on the support side to said side bottom of the panel.

This feature can be provided in combination with one or more of the previous features relating to the construction of the support surface of at least some of the jaws with characteristics of low friction with respect to the workpiece.

An embodiment that can be provided in relation to this characteristic is also described in document MI94A002230 (101994900399989) the teaching of which can also be used for the present invention with obvious modifications determined by the different configuration of the machine.

As already described above, each gripping member can be moved independently of the other gripping members along the associated longitudinal guide.

According to a further feature, said machine can comprise two or more machining stations arranged side by side with reference to the longitudinal extension of said longitudinal guides;
said longitudinal guides having such a length as to pass through each of said two or more machining stations, while for each machining station, or for the portion of said longitudinal guides provided at each machining station, there are respectively three gripping members by each of said two longitudinal guides and while optionally said intermediate longitudinal member also extends correspondingly to the extension of said two longitudinal guides.

In this case, the longitudinal guides define a machining path of the workpiece which extends along the succession of machining stations.

According to an embodiment, each of said stations can perform a different machining being configured in a way corresponding to said different machining, for example provided with a machining head which can operate with a different machining tool intended to operate in a different way on the material of the workpiece.

At least some of the gripping members, or all of said gripping members can be controlled in such a way as to transport the workpiece from one station to the next, always remaining constrained at least for a part thereof to the workpiece.

Alternatively and preferably, each of the machining stations of the succession of machining stations distributed along the processing path is associated with a predetermined number of gripping members which are configured to be able to move within a predetermined range of maximum distance between a downstream position and a position upstream of the corresponding machining station, while the advancement between one station and the next takes place by operating the transfer members of the upstream station, with reference to the advancement direction of the piece, so as to be in the active gripping condition for a rear end part of the workpiece up to the terminal feed position of said gripping members provided for the corresponding station and thus feeding a front part of the workpiece left free by said gripping members of the upstream station, in the area at downstream of the trailing end of the range of traversing the gripping members of the next station, which can then be activated relative to gripping the workpiece, the gripping members of the rear end of the workpiece still projecting into the field being subsequently deactivated of translation relative to the upstream station.

Thanks to an alternate actuation of the drive members of the two adjacent stations in active gripping condition and in inactive gripping condition and to an alternate translation between them in such a way that the workpiece always rests on the lower jaws of the gripping members, while it is blocked by at least a single pair of gripping members in the active gripping condition consisting of respectively a gripping member for each of the longitudinal guides, the panel can be made to advance, always maintaining the same number of gripping members within each station.

Maintaining a predetermined number of gripping members for each station of a plurality of stations distributed along a machining path also allows simultaneous machining to be performed on a plurality of workpieces. For example, each of the provided stations or a subgroup of successive stations performs a machining on a corresponding piece, the pieces being different from one another and/or the machining also being different from one another.

The foregoing clarifies the extreme operational flexibility and also the constructive simplicity of the machine according to the present invention.

The synchronised and coordinated movement of the longitudinal guides, of the gripping members and of the support and movement structures of the machining tools of said one or more stations is commanded by a numerical control unit which commands the corresponding motorised actuators so as to carry out the synchronised movements of the aforesaid elements and controls the effective execution of the movements thanks for example to movement and/or position sensors. This command and control takes place thanks to the execution by the control unit of instructions codified in a control software and which define the movement commands of the single operating elements defined above corresponding to the foreseen workings.

In addition to the configuration described above, various embodiments are possible which can be provided alternatively to each other or when mechanically compatible in any combination or sub-combination between them and/or with one or more of the characteristics described above.

With reference to a first variant, when the panel or the workpiece has a three-dimensional configuration, i.e. a non-planar trend, but elements also oriented in the direction perpendicular to the work plane, the gripping members can also be made translatable in the vertical direction, so that the clamping jaws are flush with the corresponding side edge of the workpiece.

According to yet another possible variant, when the panel or workpiece has side edges that are not straight and parallel to the longitudinal direction of the longitudinal guides, it is possible to provide that the gripping members are also translatable in a direction perpendicular to the longitudinal extension of the corresponding longitudinal guide.
In this case, the gripping head, i.e. the clamping pliers is not directly mounted on the cart or on the slide engaged in sliding on the corresponding longitudinal guide, but is mounted on a cart or a slide which in turn slides along a guide oriented perpendicular to the longitudinal guide and mounted on said cart or on the slide slidingly engaged on said longitudinal guide.

In this case, while the transversal translation of the longitudinal guide(s) operates for adaptation to the width of the coarser piece, the transversal translation of the longitudinal guide of the individual gripping members allows fine adjustment of the position of the corresponding gripping member in a manner that conforms to the perimeter shape of the facing side edge of the workpiece.

In a combined embodiment, the gripping members are mounted on the cart or on the slide engaged in sliding along the corresponding longitudinal guide with the interposition of a combination of translation guides which allow movement of the plier in the two remaining directions perpendicular to said longitudinal direction.

According to yet another embodiment, said pliers of each of the gripping members can be further rotated according to at least one vertical axis and/or according to at least one horizontal axis, for example an axis perpendicular to the longitudinal extension of the longitudinal guide and/or parallel to said longitudinal extension.

Still according to a possible executive variant, the two longitudinal guides can be translated with respect to each other in the direction perpendicular to their longitudinal extension so that the two guides can be oriented in a position that is not parallel to each other.

Still according to a further executive variant, which can be provided in any combination or sub-combination with one or more of the previous embodiments and executive variants, said machine can have three longitudinal guides oriented or orientable so as to be parallel to each other or not parallel at least for one of them and which three longitudinal guides can be positioned at transversal distances that can be set and adjusted from each other. Said longitudinal guides can be correspondingly made according to one or more of the characteristics and/or variants described above. In this case, the intermediate longitudinal guide can have gripping members configured to cooperate with a work panel positioned between a first sliding guide and said central sliding guide and a work panel positioned between said intermediate guide and said third longitudinal guide, at least one independent machining station being provided for processing the panels positioned between said first sliding guide and said central sliding guide and at least one independent machining station for the work panels positioned between said intermediate guide and said third longitudinal guide. Alternatively, it is possible to provide a common machining station for said panels positioned between said first sliding guide and said central sliding guide and between said intermediate guide and said third longitudinal guide, which common machining station has at least one machining tool for respectively the panels positioned between said first sliding guide and said central sliding guide and between said intermediate guide and said third longitudinal guide, which tools can be operated and moved independently of each other.

Obviously it is possible to provide a longitudinal member with support heads interposed between the central guide and each of the two outermost longitudinal guides.

The aforementioned executive variants clearly demonstrate the great flexibility of the configuration object of the present invention which allows in a simple way to define constructive characteristics and spatial movement of the various operating members.

These and other characteristics and advantages of the present invention will become clearer from the following description of some embodiments illustrated in the attached drawings in which:
Fig. 1 shows a perspective view above of an executive example of the machine according to the present invention, the part of said machine relating to two machining stations arranged side by side at a predetermined distance along the longitudinal extension of the longitudinal guides being shown.

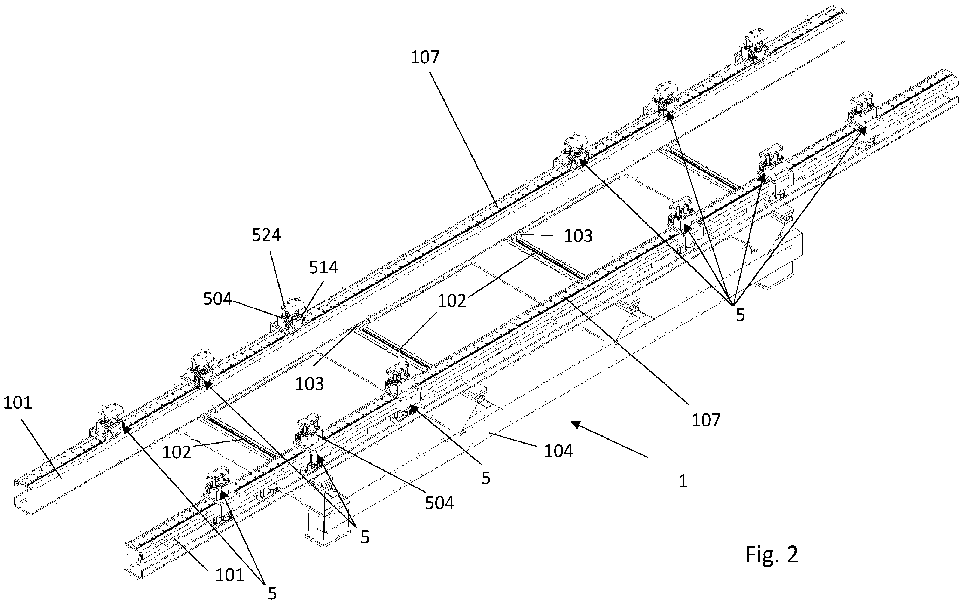

Fig. 2 shows a perspective view from above of the elements of the worktable limited to the two longitudinal guides, the crosspieces for supporting them and the gripping members provided on the two longitudinal guides.

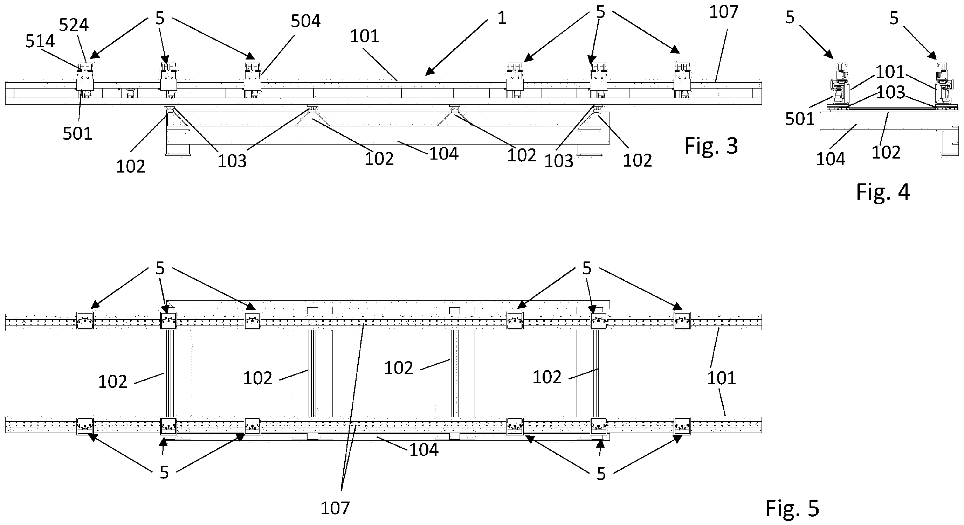

Figs. 3, 4 and 5 respectively show the combination of figure 2 in a side elevation view, a view in the direction of the longitudinal axis of the longitudinal guides and an upper plan view.
Fig. 6 shows a transversal section with respect to the longitudinal axis of the longitudinal guides, of the worktop according to the embodiment of the previous figures.
Fig.7 is an enlarged detail of figure 6 relating to only one of the two longitudinal guides and to the central longitudinal beam with the enlarged support heads.
Figures 8 and 9 show enlarged views of the gripping member respectively mounted on the longitudinal guide and separated from it.
Figure 10 shows an enlarged view of the detail relating to the gripping head.
Figures 11a to 11c respectively show two sections along the lines AA and BB of figure 11c which shows a front view of the gripping head only.

With reference to the figures, these show a machine for machining in particular sheets or panels or pieces having similar formats, i.e. a predominant extension in a first direction a minor extension in a second direction, the said two directions subtending a plane and a dimension smaller and minor in a third direction perpendicular to the previous two directions said sheets and/or said panels and/or said workpieces being made exclusively of wood material and/or wood composite materials laminated with other materials such as plastics filled or not with natural or synthetic fibers and/or composite materials comprising a component of wood and/or natural fibers bonded together by means of plastics and/or resins or also composite materials comprising at least a component of bonded synthetic fibers and/or minerals with each other by means of plastics and/or resins or combinations of these materials.

The shape of said panels and/or of said sheets and/or of the workpieces is substantially flat at least on the surface and/or along at least one or two opposite perimeter bands. However, as already described above, the illustrated machine can be varied so as to allow processing of sheets, panels and/or workpieces having a three-dimensional shape.

The machine shown in the figures is also configured for machining sheets, panels and/or workpieces which have peripheral edges or lateral peripheral bands parallel to each other along at least two opposite sides.

The illustrated machine has a substantially horizontal worktable indicated with 1, along a greater extension of the worktable, defined here as the longitudinal extension, two machining stations 2 are provided which are arranged at a predetermined distance from each other.

The machining stations 2 are each provided with a cart or a slide 201 from which a column 202 branches off in a perpendicular direction to the worktable, or in a vertical direction which at its upper end carries, cantilevered and in a position superimposed on the worktable 1, a beam 203. This is preferably oriented as shown horizontally and transversely to the longitudinal direction of the worktable 1 and carries a sliding guide parallel to its longitudinal extension for a cart or a sliding support slide of a head support 204 of one or more machining tools (not shown in detail).

The slides or carts 201 which support the column and crosspiece combination 202, 203 of the stations 2 are engaged in sliding on a horizontal stationary guide 3 which is parallel to the longitudinal extension of the worktable 1 and which is positioned alongside a longitudinal side of said worktable 1.

As far as the machining tools are concerned, these can consist of tools operating by chip removal, such as, for example, milling cutters and/or drilling bits or, for example, surface machining tools such as grinding, abrasion, polishing tools or similar or combinations of these tools which can be activated alternately with each other in the corresponding station 2.

The tool holder head can be made in such a way as to allow the tool further degrees of movement freedom, in addition to those defined by the translation of the cart or of the slide 201 along the guide 3 and therefore of the column 202 and the horizontal translation in a transversal direction to the worktable 1 of the tool holder head along the beam 203. In particular, a degree of freedom of movement of the machining tool can consist of the fact that the same can be translated according to a vertical axis in the direction of approach against the worktable or in the direction of its removal.

Further degrees of freedom in movement of the tool can be provided by suitably configuring the structure of the tool holder head and can provide for rotations of the tool around one or more axes of which at least one can be an axis parallel to one of the translation axes.

Alternatively, the configuration of the machining stations can provide for a bridge structure and therefore a pair of vertical columns each of which is placed side by side with one of the two opposite longitudinal sides of the worktable, and is possibly mounted on a slide or a cart sliding along a longitudinal guide alongside the corresponding side of the worktable and carries one end of a beam which passes transversally above the worktable 1.

Still according to a further variant, each machining station can instead consist of at least one robotic arm having a plurality of tool movement axes which can be fixed at its end as an end effector and which is controlled by a tool movement program correspondingly to the desired workings and according to currently known techniques for the control of said robotic arms.

In the illustrated embodiment, the stations 2 described above are of the so-called cantilever type.

Although the embodiment shown has only two stations positioned at a certain distance from each other along the longitudinal extension of the worktable, it is possible to provide a number of stations greater than two or even just one machining station, by modifying obvious way the construction shown in the executive example which therefore is to be considered purely exemplifying in relation to the construction and the number of machining stations 2.

The movement of the carts and/or of the slides provided, as well as of the support head of the tool or tools is obtained thanks to motorised actuators which can be constituted by electric motors, hydraulic and/or mechanical and/or magnetic linear actuators and/ or electromagnetic and/or pneumatic or of another suitable type.

In combination with said actuators it is possible to provide position and/or orientation sensors which allow to generate control feedback of the movement actions controlled by said motorised actuators.

The motorised actuators and the sensors are connected to a control unit which includes a processor, which executes a control program including the instructions encoded in it to define the movements of the tool and therefore of the tool holder head and of the various moving parts, i.e. carts and/or slides provided in the stations 2 so as to carry out the desired workings on the piece.

A control box indicated globally with 4 brings together both the housing of the control unit and the electric wiring and the possible connections and the corresponding valves of the hydraulic, oleodynamic and/or pneumatic type.

Not all the passages of the cables and conduits are shown in detail, which are visible by way of example only in the stations 2 in the form of flexible, articulated sheaths indicated with 205. For the remainder, said cables and said conduits are guided through the stationary base structure of the machine in a position not visible in the figures or have been omitted for simplicity as they are obvious to the person skilled in the art.

With reference to the configuration of the exemplary embodiment relating to the worktable, this comprises two longitudinal guides 101. In this example the longitudinal guides 101 extend parallel to the longitudinal translation guide 3 of the cantilevered structures 202, 203 of the stations, they are positioned parallel between them and at least one of said guides is translatable transversely to its longitudinal extension and parallel to itself, so as to vary the distance between said two longitudinal guides 101 to adapt it to the corresponding dimension of the workpiece.

Each longitudinal guide 101, preferably made up of a straight profile with an open channel for at least a part of the section on the side opposite the facing longitudinal guide, rests on at least two crosspieces 102, i.e. two beams oriented transversally with respect to the longitudinal direction of said longitudinal guides 101 by means of a slide or cart 103 which can be moved independently of that optionally provided for the other longitudinal guide. The crosspieces 102 are configured or carry upper guides for sliding engagement of said slides or said carts 103. Furthermore, said crosspieces 102 are fixed in a stationary manner to a base 104.

As already highlighted, it is possible to provide that at least only one of the longitudinal guides is engaged for sliding thanks to slides or carts 103 in the guides associated with the crosspieces 102. In this case the longitudinal guide 101 which is made translatable in a direction perpendicular to its longitudinal extension, for example, thanks to the aforementioned construction is the one associated with the longitudinal edge of the worktable 1 opposite the longitudinal guide 3 for the columns 202 of the stations 2.

The longitudinal guide 101 adjacent to the longitudinal guide 3 for the translation of the columns 202 of the stations 2 can be made fixed or it can also be made similarly to the other longitudinal guide 101, i.e. can be translated in a direction perpendicular to its longitudinal extension.

In both cases, at least one of said two longitudinal guides 101 has the function of defining the spatial reference for calculating the position of the piece and the machining path of the tools relative to the workpiece and/or of the workpiece relative to the tool of processing. Preferably the longitudinal guide which has the function of defining this reference is the one directly adjacent to the guide 3 for the columns 202 of the stations 2 and therefore when this is made according to the stationary variant the reference is fixed, while when it is made according to the translatable variant, the reference stop is movable and is defined thanks to position sensors of said longitudinal guide with reference to the crosspieces 102.

The translation of at least one longitudinal guide 101 or of both longitudinal guides 101 parallel to themselves and along the crosspieces 102 is obtained thanks to motorised actuators associated with the carts or slides 103 which are also controlled by the control unit being the program executed by the same provided with instructions for controlling the movement and positioning of the longitudinal guide(s) 101 in a manner corresponding to the movement of the machining tool(s), and/or to the desired machining operations and/or to the shape and position of the piece to be to work and to the position of the areas to be worked with reference to the perimeter shape of the workpiece itself.

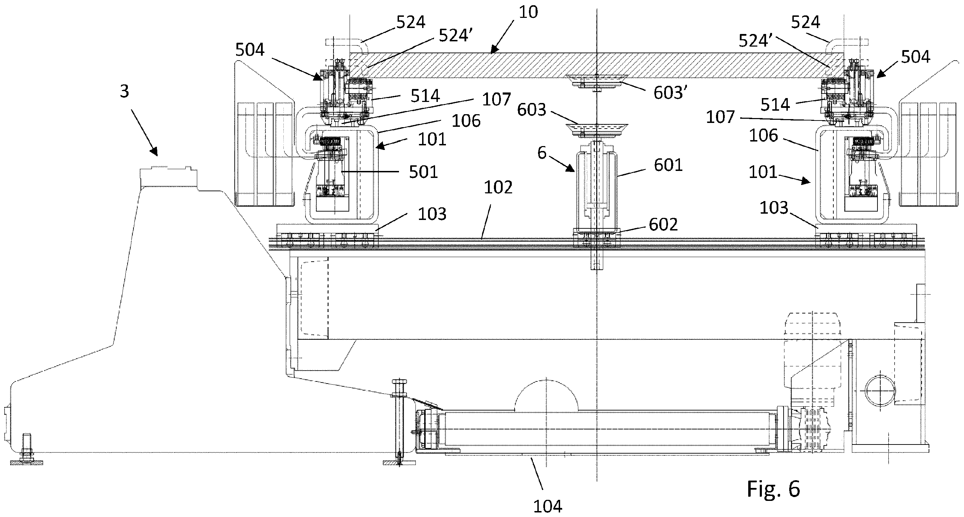

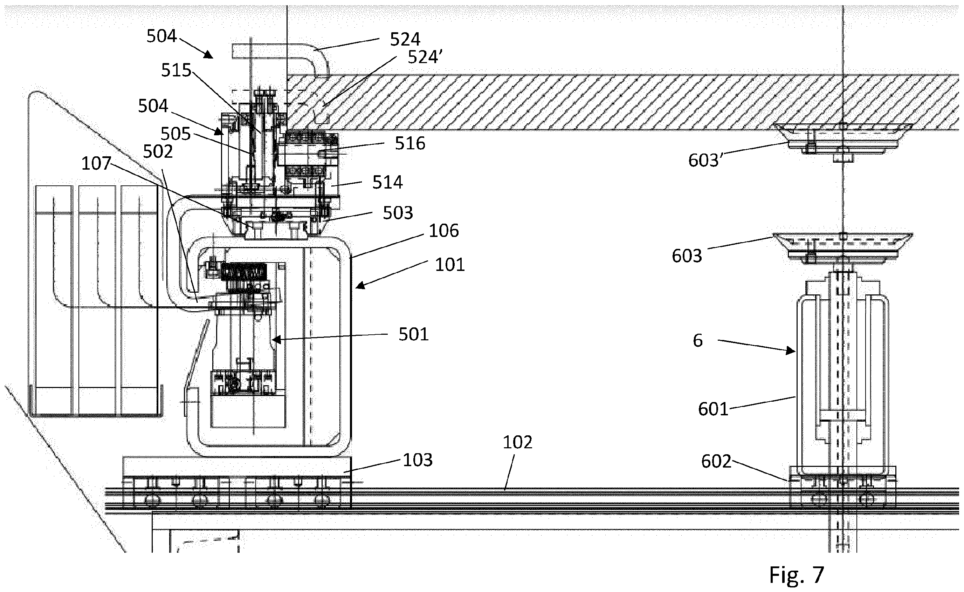

As is evident from the figures, the workpiece (visible in figures 6 and 7 and indicated with 10) is held on the worktable 1 by means of a plurality of gripping members indicated with 5.

These gripping members 5 are distributed along each of the two longitudinal guides 101 and are slidingly engaged along said longitudinal guides 101 in the direction of their longitudinal extension, each gripping member being provided with a base consisting of a slide or a cart 502 engaged on a guide rail 107 of the corresponding longitudinal guide 101 which cart or slide 502 carries a gripping head 504 thereon. The gripping heads 504 are positioned directly above the upper side of the profile forming the corresponding longitudinal guide 101.

Each gripping member can be moved separately and independently from the other gripping members along the longitudinal guide on which it is slidingly engaged thanks to an independent gearmotor 501 which is hooked to the cart 502 by means of a lower extension carrying said gearmotor cantilevered 501 in such a position that it is housed inside the hollow compartment delimited by the section of the channel profile which forms the corresponding longitudinal guide 101.

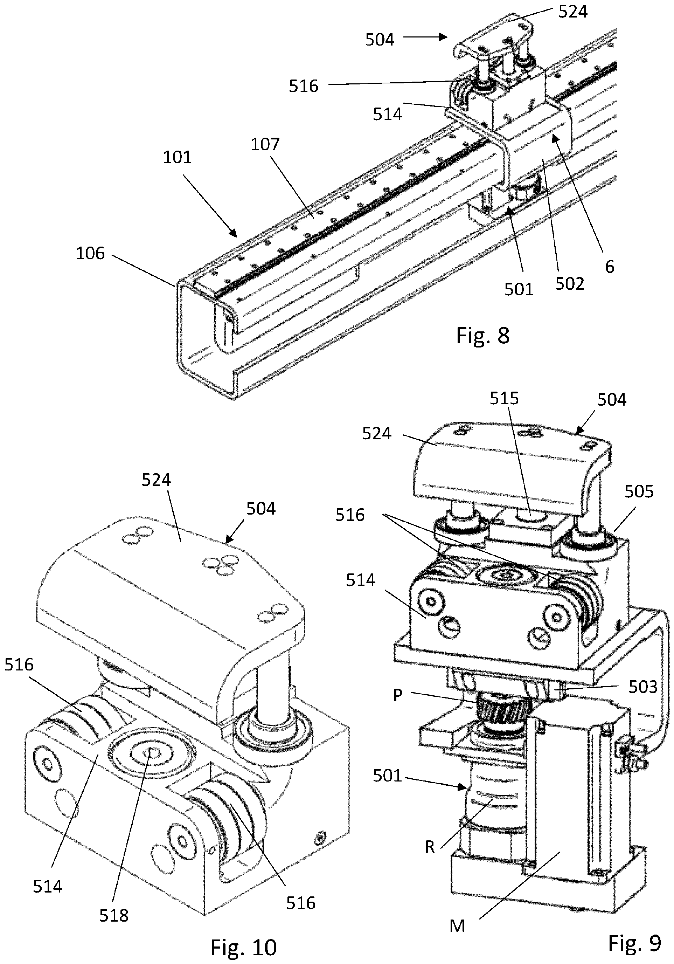

With particular reference to figures 8 and 9, the gearmotor comprises a motor M which is connected to the reducer R with a belt transmission to the shaft which has the higher speed. A pinion or wheel P engages a rack or by friction the inner side wall of the longitudinal guide 101.

A predetermined number of gripping members 5 is provided for each longitudinal guide 101 and at each machining station 2.

In the illustrated embodiment each machining station 2 is associated with three gripping members 5 for each of the two longitudinal guides 101.

The movement along the longitudinal guide 101 of the gripping members 5 takes place by means of motorised actuators associated with the carts or slides 501 and which are each independently controlled by the processing unit. The position of the gripping members along the corresponding longitudinal guide 101 is detected by one or more sensors not indicated and illustrated in detail. These can be encoders each associated with an electric motor of the corresponding motorised actuator, or it is possible to provide proximity sensors or other sensors which detect the position of each gripping member 5 along the corresponding longitudinal guide 101.

The detection sensors, as well as the motorised actuators are controlled by the control unit, the same executing a control software which includes instructions for receiving and processing the measurement signals from the sensors and for commanding the movement of the gripping members 5 correspondingly to the desired machining operations and in a synchronised manner with the movement of the tools or the tool in the corresponding station, as well as with the positioning of the longitudinal guides 101.

FIG. 7 shows a cross-section from which a preferred, but non-limiting embodiment of a gripping member is better illustrated. In the present illustrated case, the gripping members for the two longitudinal guides 101 are identical to each other since the conformation is symmetrical with respect to a central axis of symmetry between said two longitudinal guides.

The cart 502 slides on a guide 107 provided on the upper side of the sections 106 which form the longitudinal guides 101 by means of a sliding cart 503. A lateral arm of the cart 502 protrudes from a lateral longitudinal opening of the profile 106 and is connected with a branch superimposed on the upper side of the guide 101, or of the profile 106 of the same with a further cart 503 which slidingly engages with an upper longitudinal guide rail 107. The cart 502 carries at the bottom a gearmotor unit 501 configured so as to be housed without interfere with the internal walls in the compartment defined by the section of the profile 106 which forms the longitudinal guide 101.

The gripping head 504 is made in the form of a gripper with two vertically superimposed jaws 514 and 524. The lower jaw 514 is stationary with respect to the cart or the slide 503, while the upper jaw 524 is movable vertically in two directions respectively of spacing and of approach to the lower jaw 514 and for a predetermined stroke as shown in the figure and highlighted by the position of maximum approach illustrated with broken lines and indicated with 524'.

The upper jaw 524 is cantilevered by a vertical stem 515 of a linear actuator 505, for example an oleodynamic, hydraulic or pneumatic actuator. Also this actuator is controlled by the control unit and also in this case, the control unit executes a software which includes the instructions for commanding the movement of the upper movable jaw 524, alternatively in a position spaced from the opposite lower jaw 514 or in a position approached against the same and in contact with the facing upper surface of a workpiece 10 which is thus clamped in correspondence with an area of the perimeter edge parallel to the longitudinal guide 101 between said two jaws 514 and 524.

The clamping can take place with a pre-established force which is exerted by the traction action of the linear actuator on the upper jaw, or it is possible to provide that the upper jaw is subjected to the action of a spring which stably loads it with a pre-established force in the direction of approach to the lower jaw 514, so that in the absence of actuation of the linear actuator 505, the upper jaw 524 is automatically pushed towards the lower jaw 514 with a predetermined clamping force determined by the elastic element. This is not illustrated in detail. When actuated, the linear actuator must exert on the upper jaw 524 a force such as to oppose and overcome that of the elastic element, thus bringing the upper jaw 524 into the position of distance from the lower one 514 and of detachment and release of the peripheral edge of the workpiece 10.

A further constructive variant can provide that the elastic force operates in the opposite direction, i.e. that the upper jaw 524 is stably urged by an elastic element in the extreme position of maximum distance from the lower jaw 514. In this case the clamping action must take place thanks to the linear actuator.

According to yet another characteristic, the lower jaw 514 has a support surface for the lower side of the peripheral edge of the workpiece 10.

This support surface is designed in such a way that it has a low frictional force towards the workpiece so as to allow a relative sliding or rolling movement of a gripper in the inactive gripping condition along the edge of the workpiece facing the corresponding longitudinal guide 101.

This reduced friction force can be obtained by providing a layer of material with a low friction coefficient and which therefore allows sliding of the piece along said support surface of the lower jaw 514, or as envisaged in the present embodiment, the support surface is constituted, at least in the open gripper condition, i.e. in the inactive gripping condition with the upper jaw moved away from the facing surface of the piece 10, by one or more rolling elements 516. These rolling elements can consist of rollers and/or balls housed in rolling seats according to at least one axis provided below the upper sides of the lower jaw 514 and which hold said rolling elements in such a position, whereby the peripheral surface of the same protrudes by a predetermined extent outwards with respect to the remaining stationary surface of the side of the lower jaw 514, at least when said gripper is open, i.e. said jaws 514 and 524 are spaced apart to a greater extent than the dimension of the workpiece 10 in the direction parallel to that of spacing of said jaws.

According to a possible variant and as already highlighted above, the rolling supports or rolling seats of said rolling elements 516 can be mounted in the corresponding lower jaw 514 below the support surface in a retractable manner, i.e. in such a way as to allow to make the said rolling elements 516 recess with respect to the remaining stationary part of the support surface of the lower jaw 514 against the lower side of the workpiece 10, in order to avoid exerting high pressures when clamping the piece at tangential contact lines between the rolling elements 516 and the contact surface of the workpiece 10.

This can be achieved by supporting the seats of the rolling elements 516 or the rolling axes of the same, for example when it comes to cylindrical elements in a way that can be displaced according to a vertical direction, i.e. in the direction of clamping and/or distancing of the two jaws from each other. This movement can be obtained in an active way thanks to an actuator which is suitably controlled in a synchronised way with the closing and opening of the gripper, i.e. with the relative approaching movement of the jaws and with the relative moving away from them.

Alternatively, it is possible to provide elastic means which push stably and with a predetermined force the said rolling elements 516 or the supports or seats thereof in the jaw 514, in the direction of maximum protrusion towards the piece with respect to the stationary part of the support surface of the lower jaw 514, while upon clamping they are automatically contrasted allowing the return of said rolling elements below said stationary part of the support surface of the lower jaw thanks to the clamping force of the two jaws between them and against the workpiece 10.

Other alternatives are possible, such as for example an embodiment described in document MI94A002230 (101994900399989), in which spherical rolling elements are pushed into the active position by elastic means and are automatically brought into the retracted position with respect to a stationary contact surface with the workpiece by means of a depression action.

This construction, suitably modified and dimensionally adapted to the conformation of the jaws, can also be provided in the present case. In this case, the stationary support surface of the lower jaws 514 has openings communicating with a source of suction depression in order to exert a sucker effect between the workpiece 10 and the lower jaw 514. This possibility allows to obtain without having to operate the jaws of the clamps of the gripping members 5 a temporary and preventive fixing in position, simply by connecting the lower jaws of the clamps to a vacuum source. The connection can take place by means of servo-controlled valves, the command of which is also entrusted to the control unit, the control software also providing the instructions for the command of said valves in order to perform an actuation of the preventive locking in position of the piece by means of a suction effect which is synchronised with the execution of the other operations described above for machining the piece.

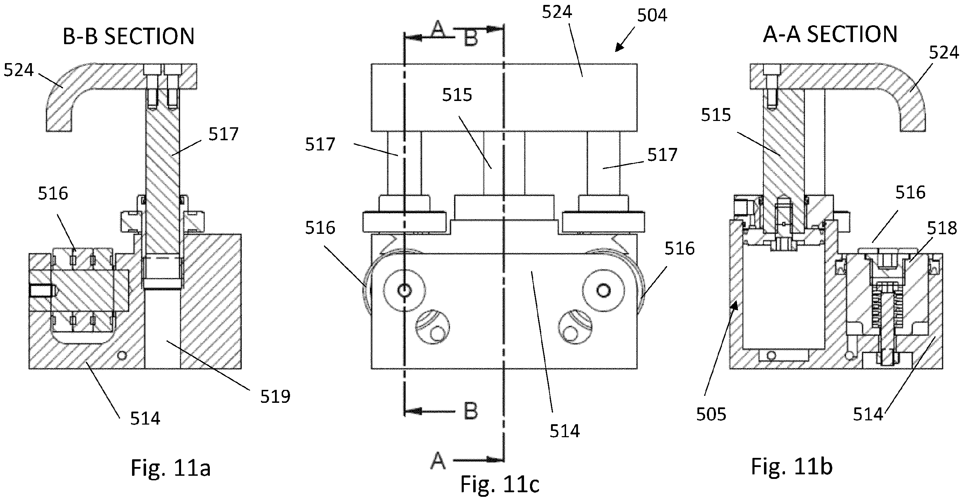

In the present embodiment, 518 indicates a piston with spring return configured in such a way that when the panel or the workpiece moves with respect to the gripping member 5, the piston remains in a downwardly retracted position due to the spring and the workpiece 10 slides on the bearings 516 which have the function of rollers; when the piece to be worked 10 is stationary, the upper jaw 524 descends and locks the panel against the rollers 516 which act as an abutment plane. The lower piston 518 rises by the effect of supplying pressurized air into the chamber for housing it and is pushed outwards towards and against the facing side of the workpiece 10. The mechanism operates on the difference in force offered by the presence of the spring even if the surface area of the two pistons is equal, as appears more clearly from figures 11b and 11c.

In particular, the piston 518 is housed in a sealed and vertically sliding chamber therein, to which chamber pressurized air is supplied from a source which may also be one of the actuation cylinders of the upper jaw 524.

As illustrated in detail in figures 11a to 11c, the upper jaw 524 can be fixed to a vertical sliding guide consisting of two vertical rods at the two opposite ends of the jaw itself, with reference to the longitudinal extension of the longitudinal guide 101. The two guide rods 517 engage in guide holes 519 made in a part of the body which forms the lower stationary jaw 514. An actuator cylinder 505 is provided centrally between said two vertical guides 517 and connects to a central point of the upper jaw 524 with the stem 515.

According to yet another feature, provided in the present example and which can also be optional, in an intermediate position between said two longitudinal guides 101 there is provided a further intermediate support element indicated as a whole with 6.

In the illustrated embodiment, this intermediate support element is provided for the entire longitudinal extension of the longitudinal guides 101 and without interruption, i.e. integral.

However, it is also possible to envisage variants in which said intermediate support element 6 is constituted by a plurality of segments arranged in a row possibly also in positions spaced apart from each other, i.e. not directly adjacent.

The intermediate support element consists of a longitudinal member 601 which is supported by a cart or a slide 602 slidingly engaged in a transverse guide which can be the same transverse guide provided on one or more of the crosspieces 102 which support the longitudinal guides 101 or it can be a further crosspiece different from the crosspieces 102 and similarly provided with a guide with which the cart or the slide 602 of the intermediate support element 6 is engaged in sliding.

The support element 6 can thus be translated in a direction perpendicular to its longitudinal axis and/or to the longitudinal axis of one of the longitudinal guides 101 so as to be positioned at predetermined distances from one and the other of said two longitudinal guides 101 according to the needs and especially approximately along the central longitudinal axis between said two longitudinal guides 101.

At predetermined distances from each other along the longitudinal extension of the intermediate support element 6, the longitudinal member 601 carries support heads 603 which are mounted that can be moved upwards and downwards, i.e. towards the workpiece and/or away from said workpiece so as to be able to be brought into contact with the side thereof facing towards said support heads.

The stroke of said support heads towards the piece 10 or away from the piece 10 is adjustable so as to generate an intermediate support of the workpiece 10 and to compensate for any downward bulging and/or upward bending, of the workpiece 10 due to a limited resistance to bending of the latter as previously described.

The position reference relative to the workpiece is defined for example as a function of the position of the support surface of the lower jaws 514 of the gripping members 5 and as a function of the shape of the cross section according to a vertical plane of the workpiece in the condition not subjected to bending stress.

In order to be able to recover an upward bending of the piece which can for example be due to shear compression actions exerted due to tolerances by the gripping members in the piece clamping condition and by the relative position of the two longitudinal guides 101, the said support heads can also be made with suction or sucker effect so as to remain fixed with a pre-established force to the workpiece and therefore be able to exert a downward traction on the same by means of the support heads, restoring the original shape of the piece in processing and compensating for the bending .

Said support heads 6 can be provided fixed in position with respect to the longitudinal extension of said intermediate support element 6 or they can also be translatable along the same thanks to a combination of longitudinal guide and slides or carts for supporting one or a subgroup of said bearing heads.

In relation to the possibility of exerting a suction effect, it is possible to provide an embodiment similar to that described in document MI94A002230 (101994900399989) .

More generally, the enlarged heads can have a cup-like shape into which one or more openings of one or more suction ducts or connected to a vacuum source open.

Similarly to what has been described for the gripping members, the movements of the longitudinal member 601 and of the carts or slides 602, the movement of the support heads and the activation/deactivation of the possible holding action by means of vacuum for said support heads is controlled thanks to motorised actuators, of any type and/or servo-controlled valves, in combination with position or displacement and/or pressure sensors from the control unit and the control software executable and executed by the same includes the instructions for commanding said operating elements in a manner consistent with the desired machining operations and the shape of the workpiece as well as in a synchronised manner with the further operating units of the machine in order to obtain the desired machining operations.

In figures 6 and 7 the head 603 is shown in the two extracted positions against the piece 10 and indicated with 603' and completely withdrawn and indicated with 603.

With reference to the embodiment shown in the figures, various variants are possible as already described above.

In the current configuration of the machine, some positions especially relative to the parallelism of the longitudinal guides 101 are fixed and it is only possible to vary the distance between said two longitudinal guides 101.

As previously indicated, it is clear that by making the slides or carts 201 rotatable with respect to the longitudinal guides 101 and returning to a vertical axis, it also becomes possible to position the longitudinal guides 101 so that they are not parallel to each other.

Similarly, if one wishes to operate on workpieces which have non-regular plan shapes, such as for example wavy, arcuate or in any case curved edges, it is possible to provide that the grippers of the gripping members 5 are fixed to the upper slide 503 by means of a further combination of slide and cart which is oriented transversely to the longitudinal direction of the longitudinal guide 101, i.e. optionally parallel to crosspieces 102. In an optional embodiment said combination of slide or cart and transverse guide can also be rotatable about a vertical axis so as to be able to assume different orientations with respect to the direction perfectly perpendicular to the longitudinal guide.

In combination or alternatively with one or more of the preceding characteristics, it is also possible to provide that the whole gripping head 502, or the said gripper, can be translated vertically and possibly also rotated with respect to a vertical axis.

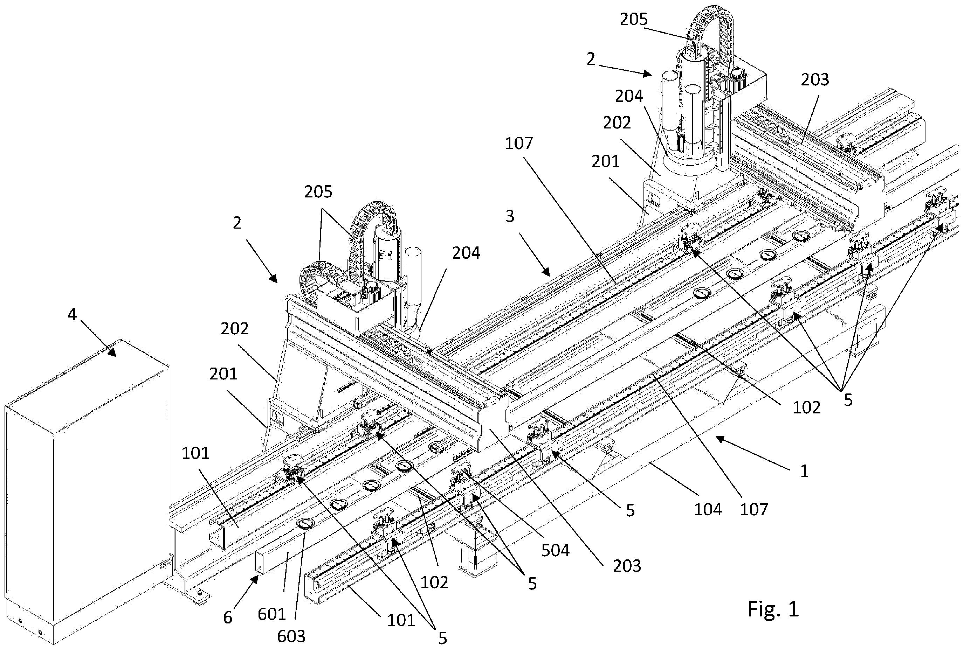

As is evident from the figures and in particular from figure 1, in the present embodiment the longitudinal guides 101 extend so as to pass through each of the two processing stations provided. For each station, indicatively, a number of at least three gripping members 5 is provided for each longitudinal guide 101, but this number can also be greater and different for one or more stations 2 provided in the same machine.

Thanks to this feature, by operating the gripping members alternatively, they can be used to transfer a panel being processed from one to the other of a plurality of machining stations 2 distributed along a processing path defined by the longitudinal guides 101. This without the number of gripping members permanently associated with each of the processing stations 2 being changed in any way.

This also makes it possible to alternatively perform simultaneous machining of several workpieces in just one of the stations or in a succession of stations, between which the workpieces of a succession of workpieces are transferred from one to the other of said succession of two or more machining stations.

Although the above is not explicitly illustrated, the operating modes described do not require constructive variations of the machine, but essentially a control of the operations of the operating units such as to guarantee the aforementioned functionalities which are evident by difference with respect to what is described and illustrated in relation to the preferred example.

## Claims

1. Machine for machining panels, sheets or similar, in particular of wood or materials made of or comprising wood, comprising:
- at least one machining station with at least one machining tool;
- said machining tool being movable by means of motorised actuators along at least one processing axis, preferably along at least two or more processing axis;
- at least one worktable and positioning/feeding table of a work panel, said worktable passing for at least part of its extension in the workstation in such a position that a work panel is accessible on at least one side by the machining tool;
- said worktable is provided with a plurality of gripping members of said at least one work panel, said gripping members being operable alternatively in an active condition of gripping said at least one work panel or in an inactive condition in which said at least one work panel is free from said gripping members,
**characterised in that**
- each of said gripping members comprises a gripper comprising at least one movable jaw which is movable by means of actuators, alternatively in a position of retaining by clamping said work panel, towards an opposed jaw, and in a position of releasing said panel from said retaining condition, in a spaced position from said opposed jaw by a greater extent than the corresponding size of said work panel
- each of said gripping members being provided with a cart or a translation slide;
- a pair of longitudinal slide guides extending over at least part of the corresponding dimensions of said worktable, and on each of said longitudinal slide guides the respective cart or slide of at least one of said plurality of gripping members is sliding engaged in said longitudinal direction of said longitudinal slide guide;
- at least one of said longitudinal slide guides being transversally translatable supported at its longitudinal extension and temporarily lockable in a traversing position, by at least one pair of carts or slides, which carts or slides are provided at mutually spaced intervals along said longitudinal extension of said guide and are sliding engaged with a corresponding transverse traversing guide;
- motorised translation actuators of at least some of said gripping members and/or of said at least one longitudinal guide;
- position sensors of said tool and/or of one or more of said gripping members and/or of said at least one longitudinal guide;
- a control unit performing control software in which instructions are encoded to control the respective motorised actuators for moving the machining tool and/or one or more of said gripping members and/or at least one of said longitudinal guides and/or the active gripping and inactive release conditions of said gripping members, corresponding to the type of machining to be performed on the panel to be machined.

2. Machine according to any one or more of the preceding claims, wherein both longitudinal guides are movable in a direction perpendicular to their longitudinal extension and temporarily lockable in a traversing position, the position in said direction perpendicular to its longitudinal extension of one of said two longitudinal guides being set in the control unit as the reference position for calculating the movement of the machining tool and/or the position of the gripping members and/or the position of said second longitudinal guide with reference to the machining to be performed on said panel.

3. Machine according to claim 1 or 2, wherein the machining tool is of the so-called cantilever type, i.e., the machining station comprises a cantilever beam positioned above said two longitudinal guides and oriented transversally thereto, said cantilever beam carrying a translation guide along the longitudinal extension thereof of a machining head which in turn carries at least one machining tool, while said cantilever beam is supported by a column arranged laterally next to one of said longitudinal guides and having at its base a slide or cart for sliding along a traversing guide parallel to said longitudinal guide, said traversing guide having a length at least equal to a partial length of said longitudinal guides.

4. Machine according to one or more of the preceding claims, wherein, in an intermediate position between said two longitudinal guides, there is provided a further longitudinal support beam which is parallel to said two longitudinal guides and which bears on its upper side, i.e., facing the panel to be machined, a plurality of enlarged support heads which heads are distributed in a predetermined order along the longitudinal extension of said longitudinal support beam and are vertically movable by means of motorised actuators between an extreme position completely withdrawn against said longitudinal support beam and a position projecting towards the panel to be machined and against the facing side of said panel to be machined, optionally in a predetermined higher position with respect to the position of the lateral edges of said panel, said support beam being supported and movable perpendicularly to its longitudinal extension by means of at least one pair of support slides or carts which are positioned at a distance from each other along the longitudinal extension of said support beam and sliding engaged in corresponding transverse translation guides and are driven by motorised actuators.

5. Machine according to one or more of the preceding claims, wherein said support heads are of the suction or suction type being provided with openings on the support side against the panel to be machined, which are in communication with a vacuum and/or suction generator.

6. Machine according to one or more of the preceding claims, wherein at least one of the jaws of said gripping members is intended to cooperate with the underside of said panel, and said jaw has a support surface of said underside of said panel having a low coefficient of friction relative to the material of said underside of said panel.

7. Machine according to claim 6, wherein said low-friction surface comprises one or more rollers rotatable around horizontal axes and perpendicular to the longitudinal extension of said longitudinal guides, or belts or tapes closed on themselves and deferred around a pairs of pulleys spaced in the longitudinal direction of said longitudinal guides and rotatable about horizontal axes and perpendicular to the longitudinal extension of said longitudinal guides.

8. Machine according to one or more of the preceding claims, wherein at least one of the gripping members has a jaw intended to cooperate with the underside of said panel, and said jaw has a support surface of said underside of said panel which is suction or suction cup-shaped or suitable to apply a depression on the support side to said underside of said panel.

9. Machine according to one or more of the preceding claims, wherein each gripping member is movable independently of the other gripping members along the associated longitudinal guide.

10. Machine according to any one or more of the preceding claims, wherein said machine comprises two or more machining stations arranged side by side with reference to the longitudinal extension of said longitudinal guides;
said longitudinal guides having a length sufficient to pass through each of said two or more machining stations, wherein for each machining station, or for the portion of said longitudinal guides provided in correspondence with each machining station, respectively, three gripping members are provided for each of said two longitudinal guides, and wherein optionally said intermediate beam also extends corresponding to the extension of said two longitudinal guides.

11. Machine according to one or more of the preceding claims, wherein said machine has three longitudinal guides which are parallel to each other and which can be positioned at adjustable transversal distances from each other, said longitudinal guides being made correspondingly to one or more of the preceding claims, wherein said intermediate longitudinal guides has gripping members configured to cooperate with a panel to be machined positioned between said first guide and said central guide and a panel to be machined positioned between said intermediate guide and said third longitudinal guide, wherein at least one independent machining station is provided for machining said panels positioned between said first slide guide and said centre slide guide and at least one independent machining station for machining said panels positioned between said intermediate guide and said third longitudinal guide, or alternatively a common machining station for said panels positioned between said first slide guide and said centre slide guide and between said intermediate guide and said third longitudinal guide, which common machining station has at least one machining tool for respectively the panels positioned between said first slide guide and said centre slide guide and between said intermediate guide and said third longitudinal guide, which tools are independently operable and movable.
